# EUROPEAN PATENT APPLICATION

(11) **EP 3 690 321 A2**
(43) Date of publication of application: **05.08.2020**
(21) Application number: 20150842.1
(22) Date of filing: 09.01.2020
(51) Int. Cl.: F24B 1/20, F23K 3/14, B62D 63/06, A47J 37/07

(54) **COOKING DEVICE**

(30) Priority: 09.01.2019 US 201916243950
(71) Applicant: GMG Products, LLC, Lakeside, OR 97449 (US)
(72) Inventor: BAKER, David W., Lakeside, OR 97449 (US); PING, Wang, Scottsdale, AZ 85260 (US)
(74) Representative: Samson & Partner Patentanwälte mbB

(57) **Abstract**

A cooking device is provided herein that includes a trailer having one or more frame members and configured to couple with a vehicle. A housing is supported by the frame members and defines a heating chamber. A heat source is disposed within the heating chamber. A controller is operably coupled with an auger assembly to direct fuel to the heat source for heating the heating chamber. A power actuator is operably coupled with the controller and configured to accept electrical power from two or more power supplies and provide power to the controller from one of the two or more power supplies.

## Description

### FIELD OF THE INVENTION

The present disclosure generally relates to cooking devices that may be operably coupled with a vehicle.

### BACKGROUND OF THE INVENTION

Various cooking devices can be utilized in various locations. For some cooking devices, it may be desirable to have various power supplies for operating the cooking device in various locations, such as locations not in proximity to a traditional electrical outlet.

### SUMMARY OF THE INVENTION

According to some examples of the present disclosure, a cooking device is provided herein that includes a trailer having one or more frame members and configured to couple with a vehicle. A housing is supported by the frame members and defines a heating chamber. A heat source is disposed within the heating chamber. A controller is operably coupled with an auger assembly to direct fuel to the heat source for heating the heating chamber. A power actuator is operably coupled with the controller and configured to accept electrical power from two or more power supplies and provide power to the controller from one of the two or more power supplies.

According to some examples of the present disclosure, a cooking device includes a control unit configured to operate a heat source. A power actuator electrically powers at least one of the control unit or the heat source at a set power. The power actuator is configured to couple to a cooking device power supply and a vehicle power supply. The power actuator provides power to the control unit from the cooking device power supply when the vehicle is in motion and from the vehicle power supply when the vehicle is stationary.

According to some examples of the present disclosure, a cooking device includes a housing defining a heating chamber. A trailer operably supports the housing and includes a coupler configured to attach to a hitch assembly of a vehicle. A control unit electrically couples with a heat source. The heat source is configured to heat the heating chamber. A power actuator is configured to electrically couple to first and second independent power supplies. The first power supply electrically powers the control unit when the second power supply is unavailable and is charged by the second power supply when the second power supply electrically powers the control unit.

These and other aspects, objects, and features of the present invention will be understood and appreciated by those skilled in the art upon studying the following specification, claims, and appended drawings.

### BRIEF DESCRIPTION OF THE DRAWINGS

In the drawings:
FIG. 1 is a rear perspective view of a cooking device having a lid positioned in an open position, according to some examples;
FIG. 2 is a front perspective view of the cooking device having the lid positioned in a closed position, according to some examples;
FIG. 3 is a block diagram of a power supply of the cooking device, according to some examples;
FIG. 4 is a block diagram of the cooking device operably coupled with an electronic device, according to some examples;
FIG. 5 is a block diagram of the cooking device operably coupled with a remote server, according to some examples;
FIG. 6 is a front perspective view of the cooking device, according to some examples;
FIG. 7 is an application specific integrated circuit within a controller of the cooking device, according to some examples;
FIG. 8 is an integrated circuit within a transceiver of the cooking device, according to some examples;
FIG. 9 is a schematic wiring diagram of a temperature detection circuit of the cooking device, according to some examples;
FIG. 10 is a schematic wiring diagram of an igniter drive circuit of the cooking device, according to some examples;
FIG. 11 is a schematic wiring diagram of an igniter control circuit of the cooking device, according to some examples; and
FIG. 12 is a schematic wiring diagram of a power actuator circuit of the cooking device, according to some examples; and
FIG 13. is a schematic wiring diagram of a reference power actuator circuit of the cooking device, according to some examples.

### DETAILED DESCRIPTION

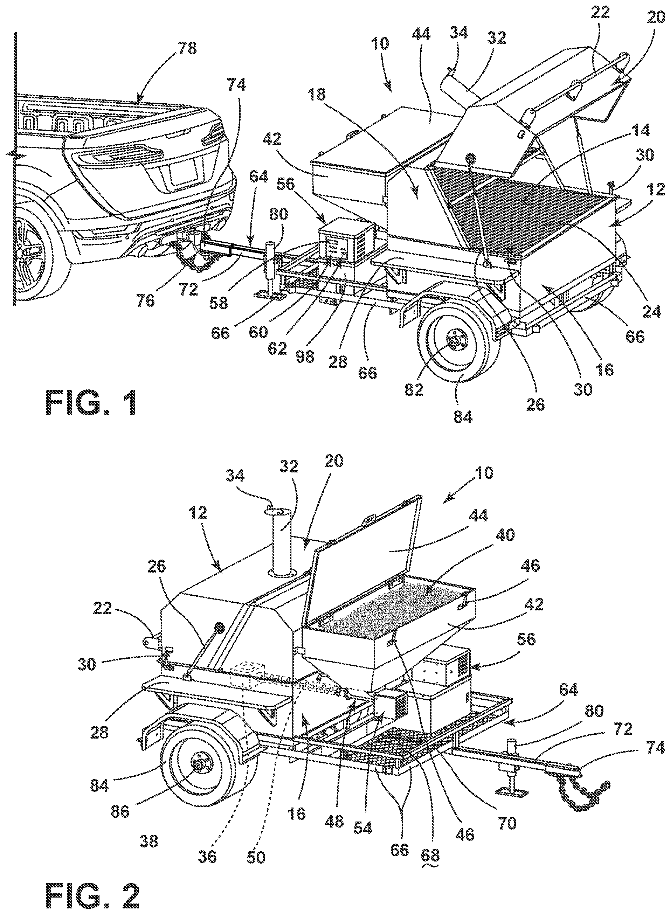

For purposes of description herein, the terms "upper," "lower," "right," "left," "rear," "front," "vertical," "horizontal," and derivatives thereof shall relate to the invention as oriented in FIG. 1. However, it is to be understood that the invention may assume various alternative orientations, except where expressly specified to the contrary. It is also to be understood that the specific devices and processes illustrated in the attached drawings, and described in the following specification are simply exemplary examples of the inventive concepts defined in the appended claims. Hence, specific dimensions and other physical characteristics relating to the examples disclosed herein are not to be considered as limiting, unless the claims expressly state otherwise.

As required, detailed examples of the present invention are disclosed herein. However, it is to be understood that the disclosed examples are merely exemplary of the invention that may be embodied in various and alternative forms. The figures are not necessarily to a detailed design and some schematics may be exaggerated or minimized to show function overview. Therefore, specific structural and functional details disclosed herein are not to be interpreted as limiting, but merely as a representative basis for teaching one skilled in the art to variously employ the present invention.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises... a" does not, without more constraints, preclude the existence of additional identical elements in the process, method, article, or apparatus that comprises the element.

As used herein, the term "and/or," when used in a list of two or more items, means that any one of the listed items can be employed by itself, or any combination of two or more of the listed items can be employed. For example, if a composition or assembly is described as containing components A, B, and/or C, the composition or assembly can contain A alone; B alone; C alone; A and B in combination; A and C in combination; B and C in combination; or A, B, and C in combination.

In recent years, vehicle movable cooking devices that allow for the transportation of the cooking device with vehicle assistance has become more popular. The vehicle movable cooking device can be powered by vehicle-mounted power supplies or other sources and can move and operate in a wide variety of locations. With the limits of power consumption and safety requirements of the existing vehicle power supply system, the cooking device may not be able to be powered during movement of the vehicle, so that it is difficult for the cooking device to realize the functions of baking in advance and heat preservation during transportation of the cooking device. Due to this, the existing conventional cooking devices may not function continuously during movement of vehicles, which affects the adaptability and practicability of the cooking device. Accordingly, the cooking device herein may overcome these issues.

The cooking device of the present disclosure includes a trailer configured to couple with a vehicle. A housing is supported by the trailer and defines a heating chamber. A heat source is disposed within the heating chamber. A controller is operably coupled with an auger assembly to direct fuel to the heat source for heating the heating chamber. A power actuator is operably coupled with the control unit and configured to accept electrical power from two or more power supplies and provide power to the controller from one of the two or more of sources, which may assist in low power operation of the vehicle movable cooking device, normal work during movement of the vehicle, broadening the applicable scenarios of the vehicle movable cooking device, and being suitable for various uses.

Referring now to FIGS. 1 and 2, a cooking device 10 includes a housing 12 that defines a heating chamber 14 in which food items to be prepared may be placed. In some examples, the housing 12 may include a lower portion 16, an upper portion 18, and a movable lid 20. The movable lid 20 provides and inhibits access to the heating chamber 14 and may be operably coupled to the upper portion 18 through a hinge. A handle 22 can be positioned on the lid 20 to enable a user to move the lid 20 between an open position, an example of which is illustrated in FIG. 1, and a closed position, an example of which is illustrated in FIG. 2. During operation, the lid 20 can be opened to place food items on one or more racks 24 within the heating chamber 14. The lid 20 can then be closed so as to retain heat and/or smoke supplied to the heating chamber 14 for food preparation. To assist in moving the lid 20 between the open and closed positions, a lift assist 26 may be operably coupled with the lid 20 and a stationary component of the cooking device 10, such as the lower portion 16 of the housing 12 and/or a shelf 28 extending from the lower portion 16 of the housing 12. The lift assist 26 may provide upward vertical force on the lid 20 through hydraulics, pneumatics, spring mechanics, motors, and/or any other practicable device.

When the lid 20 is positioned in the closed position, one or more lid latches 30 may maintain the lid 20 in the closed position. The lid latches 30 may be configured to retain the lid 20 while the cooking device 10 is transported, which may occur with vehicle assistance. The lid latches 30 may also retain the lid 20 such that additional heat is preserved within the heating chamber 14 when heated.

The cooking device 10 may also include one or more exhaust conduits 32 to remove heat and/or smoke from the heating chamber 14 that is generated during the food preparation. The exhaust conduit 32 may be selectively closed and/or altered to adjust the heating characteristics within the chamber 14. In some instances, a cover 34 may be movably coupled with the exhaust conduit 32 to alter an exit opening of the exhaust conduit 32.

The cooking device 10 may be any type of device cooking device. As non-limiting examples, the cooking device 10 may a grill, smoker, air fryer, oven, brazier, steamer, roaster, fryer, broiler, stove, and/or toaster oven. While the cooking device 10 may be any type of cooking device 10, the present disclosure will be described with continuing reference to a grill, which may utilize pellets as a fuel 40. Those of ordinary skill in the art will be able to apply the features set forth herein to other types of cooking devices 10 using the description of the present disclosure in the non-limiting example of a grill.

Various components of the cooking device 10 may be made of any desired heat-resistant material(s). As non-limiting examples, various portions of the cooking device 10 may be made of stainless steel and/or cast iron. The cooking device 10 can be shaped to have an enclosed inner chamber, i.e., the heating chamber 14, which may be heated by a heat source 36. The heat source 36 can include an igniter 38 that may independently produce heat. Additionally, and/or alternatively, the igniter 38 may ignite a fuel 40 and/or sustain a burning of the fuel 40 to produce heat within the heating chamber 14, which may occur in a burn box.

In some examples, the fuel 40 may be stored in a hopper 42, or any other type of container, and may contain wood pellets for producing the heat and/or smoke. In some instances, the pellets are loaded into the hopper 42 through movement of a panel 44 from a closed position to an open position thereby providing access into the hopper 42. When the panel 44 is positioned in the closed position, one or more panel latches 46 may maintain the panel 44 in the closed position. The panel latches 46 may be configured to retain the lid 20 while the cooking device 10 is transported, which may occur with vehicle assistance. Moreover, the panel latches 46 may be locked to prevent tampering with the pellets when locked.

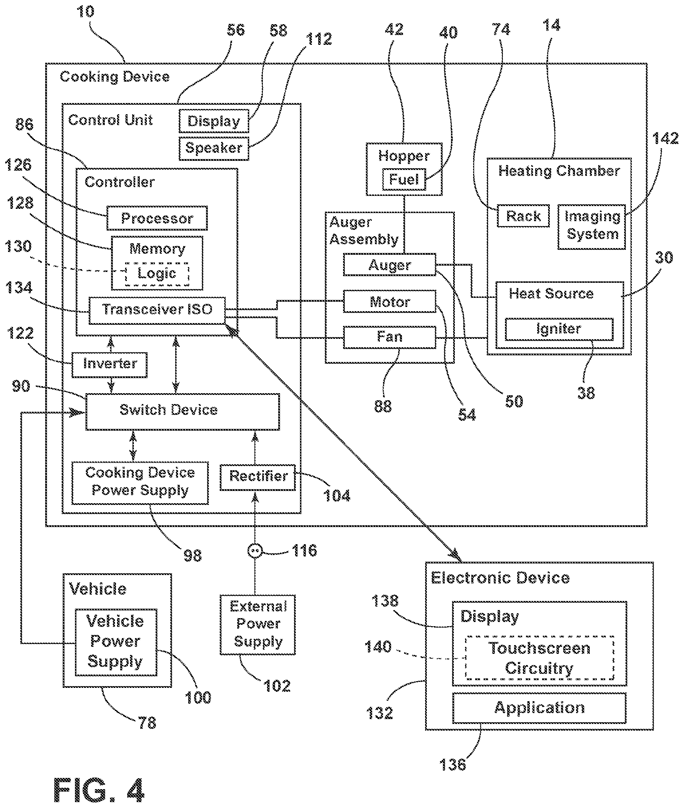

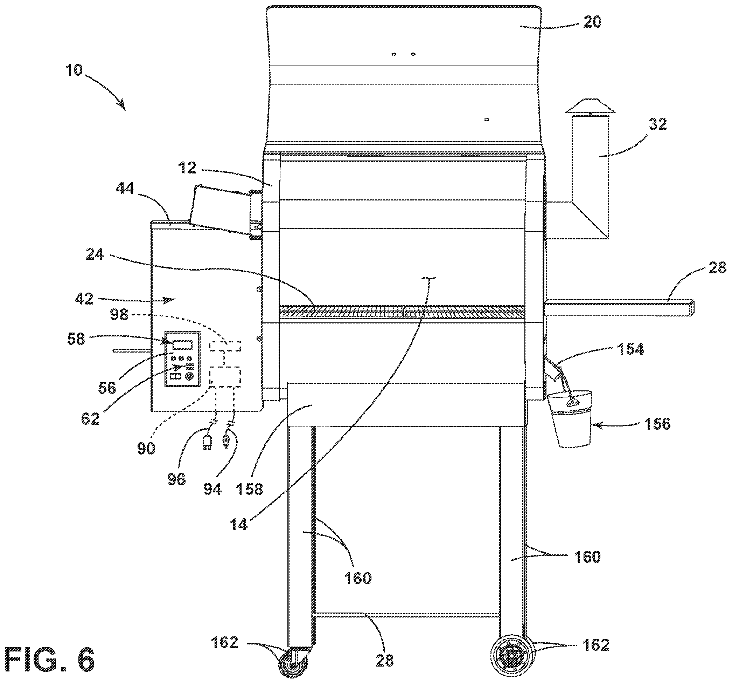

The pellets may be transported from the hopper 42 using an auger assembly 48. The auger assembly 48 may include an auger 50 centrally disposed in a channel 52 that may extend along an underside of the heating chamber 14. The channel 52 includes openings or the like that place the channel 52 and/or the auger 50 in gaseous communication with the heating chamber 14. When the auger 50 is rotated within the channel 52 by a motor 54, pellets are drawn from the hopper 42 and transported via the auger 50 through the channel 52. One or more igniters 38 (e.g., electrical igniters) locally heat the wood pellets and cause the pellets to emit heat and/or smoke for the heating chamber 14. After the consumption of the pellets, the channel 52 and the auger 50 may further transport the consumed pellets (or remains thereof) to a used pellet discharge port 154 (FIG. 6). At the used pellet discharge port 154, the pellets can exit the cooking device 10. In some instances, a bucket 156 (FIG. 6), container, tray, or the like may be disposed at the used pellet discharge port 154 to collect the pellet remains and/or food runoff that becomes detached from the food item while in the heating chamber 14. The auger assembly 48 may further include one or more fans 88 (FIG. 4) that direct airflow through the channel 52 and/or through the heating chamber 14.

It will be appreciated that the cooking device 10 of the present disclosure may use any desired fuel 40 for heating the heating chamber 14. As non-limiting examples, the fuel 40 for the cooking device 10 may be wood (e.g., wood pellets), stick burners, natural gas, charcoal, gas, and/or an electrical heating unit. The heat source 36 may sustain a temperature inside the cooking device 10 of around 100 to 800 degrees Fahrenheit for cooking the food items. In some examples, the cooking device 10 may be able to automatically (without human intervention after initiation) regulate the temperature inside the cooking device 10 to a predetermined set temperature or temperature range.

With further reference to FIGS. 1 and 2, the cooking device 10 further includes a control unit 56 for controlling various components of the cooking device 10, including, but not limited to, the auger assembly 48, the igniters 38, a fan 88 (FIG. 4), the motor 54, and/or any other electrically powered device within the cooking device 10. The control unit 56 may further include a display 58 for providing the status of the operation of the cooking device 10 and/or operational data such as configured a visual indication of the power supply being utilized, such as working time, heating chamber temperature, battery capacity and power supply voltage, and alarming when the set time is up or when the barbecue oven temperature is abnormal. The control unit 56 may further include an input device 60 for accommodating user input, a cabinet temperature sensor for determining the temperature inside the chamber 14, a probe for determining the internal temperature of the food being cooked, a timer module for setting the cooking time for the cooking device 10, a probe temperature set module for setting the internal temperature of the food product based on the user's preference for the cooked food, a display control relay for powering the display 58, and/or a heat source control relay for cycling the heat source ON and OFF. The probe may be electronically coupled with one or more input/output (I/O) ports 62 disposed on the control unit 56. The I/O ports 62 may be configured in any manner and may interact and/or couple with a wide array of devices.

Still referring to FIGS. 1 and 2, the cooking device 10 may include and/or be integrated within a trailer 64 for the transportation/trailering of the cooking device 10. The trailer 64 includes a plurality of frame members 66 for supporting various components of the cooking device 10, such as the housing 12, the control unit 56, portions of the auger assembly 48, and/or any other component. The frame members 66 may also define a storage space 68 disposed forwardly of the housing 12. A shelf 70 may be supported by the frame members 66 that define the storage space 68.

A tongue 72 may extend forwardly of the frame members 66 with a hitch coupler 74 is fixedly attached to an end portion thereof. The hitch coupler 74 is configured to attach to a hitch assembly 76 of a vehicle 78. A trailer tongue jack 80 is affixed to the tongue 72. The jack 80 can lift the hitch coupler 74 to assist in attachment of the coupler 74 to the hitch assembly 76 of the vehicle 78 and/or level the cooking device 10, and/or the trailer 64, once separated from the vehicle 78.

The trailer 64 is suspended by springs (e.g., "leaf' springs). The springs can be attached to the frame members 66. An elongated axle 82 can extend perpendicularly to the tongue 72 and wheels 84 are attached to the elongated axle 82. The axle 82 may be of any shape, form, or structure. In addition, while the frame members 66 of FIGS. 1 and 2 define a rectangular shape, the trailer 64 may be of any shape with any number of sides. Moreover, while the trailer 64 of FIGS. 1 and 2 includes two wheels (i.e., the wheels 84), any number of wheels may be used. For example, the trailer 64 may include a tandem axle in which four wheels would be used.

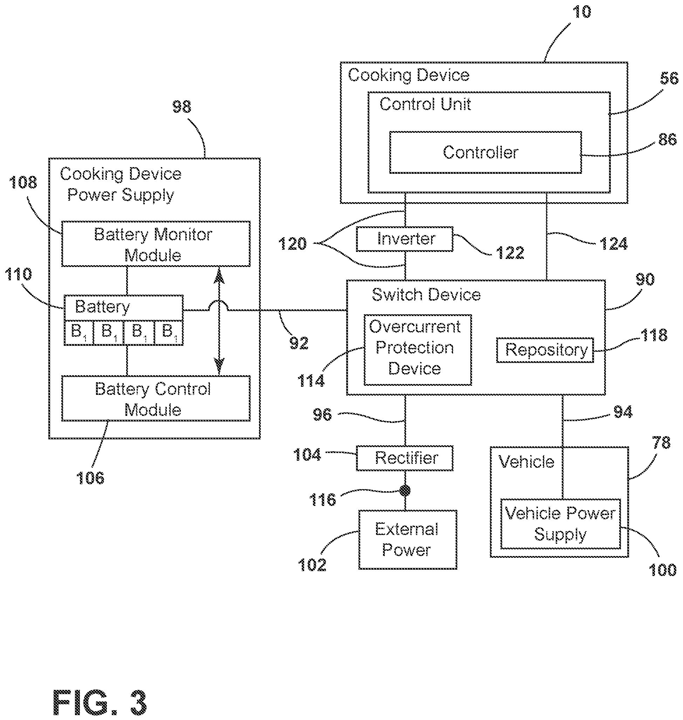

Referring to FIG. 3, the control unit 56 may include a controller 86 for controlling the various functions and components of the cooking device 10. The controller 86 may have power supplied thereto through a power actuator 90 that may include a first branch 92, a second branch 94, and a third branch 96 which are electrically connected with the controller 86 after being connected in parallel with each other. The first branch 92 may be connected with a cooking device power supply 98, the second branch 94 may be configured to connect with the vehicle power supply 100, and the third branch 96 may be configured to couple with an external power supply 102 and a rectifier 104 in series. In some examples, however, the rectifier 104 may be absent from the third branch 96. In various examples, the power actuator electrically powers at least one of the control unit 56 or the heat source 36 at a set power. The power actuator 90 may additionally or alternatively power any other component of the cooking device 10.

In some instances, the cooking device power supply 98 may be located within the cooking device 10 and/or otherwise disposed on the trailer 64. The vehicle power supply 100 may be a battery, or other power storage device, disposed within the vehicle 78 and/or a power generating device within the vehicle 78, such as an alternator. The external power supply 102 supplies power from the grid and connects to, for example, a 102-volt alternating current (AC) power outlet that supplies power to the control unit 56 and/or charges the cooking device power supply 98. The rectifier 104 converts the AC power from the external power supply 102 to direct current (DC) power, which may be stored in the cooking device power supply 98 and/or directed to the control unit 56, through the power actuator 90.

During operation of the cooking device 10, the power supplied to the cooking device 10 can be flexibly or dynamically switched based on detected conditions through the power actuator 90. The power actuator 90 may be configured to accept electrical power from two or more sources and provide power to the controller 86 from one of the two or more of sources. For example, the cooking device power supply 98 can be used to supply power when the cooking device 10 is separated from the vehicle 78. The vehicle power supply 100 can be used to supply power when the cooking device 10 is operably coupled with the vehicle 78. The external power supply 102 can be used to supply power when a fixed external power supply 102 is available. Through the use of various power supplies, the cooking device 10 may be able to function in many different environments and/or for longer durations of time when compared to conventional cooking devices. However, in some examples, the cooking device 10 can accept electrical power from a single source without departing from the scope of the present disclosure.

The cooking device power supply 98 may include a battery control module 106, a battery monitor module 108, and a battery 110 operably coupled with the power actuator 90. The battery 110 can include multiple cells or batteries (B1, B2,... BN, where N is an integer), which may be collectively referred to as the "battery 110." The various batteries B1-N of the battery 110 may have the same voltage or different voltages, such as 12V and/or 24V and may be configured as any type of the battery, such as alkaline type batteries, rechargeable batteries, lithium ion, nickel-cadmium, nickel-metal-hydride, button batteries, capacitors, and/or any other suitable power storage device. The battery control module 106 communicates with the controller 86 to assess the power demand of the cooking device 10. Based on the information received, the battery control module 106 controls the battery 110 of the cooking device power supply 98. The battery monitor module 108 monitors operating conditions within the battery 110 of the cooking device power supply 98 and of each battery B1-N. As an example, the battery monitor module 108 may monitor the charge-discharge rate of each battery B1-N, the temperature of the battery 110, the state of charge (SOC) of each battery B1-N, and/or other information for determining the condition and the life of the batteries. The battery monitor module 108 may receive information from sensors disposed within the battery 110, such as a temperature sensor for monitoring temperature within the battery 110, a voltage sensor monitoring the voltage of each battery B1-N, or a charge current sensor for monitoring the current supplied to the battery for charging the battery. Based on the information from the sensors, and predetermined algorithms, the battery monitor module 108 may determine each of the operating conditions.

Based on the operation conditions of the battery 110, which may be determined by the battery monitor module 108, the battery control module 106 may determine if a battery B1-N needs to be charged, if a battery B1-N is defective, if a life of a battery B1-N has deteriorated, and/or other suitable condition for assessing the performance and quality of the batteries in battery 110. Information regarding the condition of the battery 110 and the batteries therein may be provided to the controller 86. As an example, if the performance of a given battery B 1-N from the battery 110 has deteriorated such that the battery 110 is not able to maintain a charge for a predetermined amount of time or has a charge-discharge rate below a predetermined threshold, the battery monitor module 108 may send information indicative of such condition to the controller 86. The controller 86 may then notify a user of the low performing battery 110 and recommend that the battery 110 be replaced. For instance, the controller 86 may utilize the control unit display 58 and/or a speaker 112 (FIG. 4), which may also be operably coupled with the control unit 56, for notifying a user of the detected battery condition.

The battery control module 106 controls each battery B1-N within the cooking device power supply 98 to provide power to one or more components of the cooking device 10 and/or to charge the battery 110. The components may include, but are not limited to, the control unit 56, the controller 86, the auger assembly 48, the motor 54, the fan 88, the display 58, the speaker 112, the battery control module 106, the battery monitor module 108, and/or any other device operably coupled with the cooking device 10 and/or supported on the trailer 64 that uses electrical energy to perform a function. Generally, the cooking device 10 may include multiple components that require the same electrical voltage (i.e., a standard-power device) and may also include one or more other devices that may require a larger amount of electrical voltage (i.e., a high-power device). The battery control module 106 can control the batteries to supply power to both standard-power devices and high-power devices. In some instances, the motor 54 and/or the fan 88 may require the same voltage the voltage output of the vehicle power supply 100 and/or a portion of the batteries in the cooking device power supply 98. Accordingly, in some examples, an electrical connector 116 from the vehicle 78 to a component of the cooking device 10 may power that device without any additional equipment. In addition, the battery control module 106 may electrically couple the batteries with power supplied from the vehicle power supply 100 and/or the external power supply 102 to charge the batteries of the cooking device power supply 98. A DC-DC converter may be coupled to the battery 110 for converting the power from the vehicle power supply 100 and/or the external power supply 102 to a requisite voltage level for charging the battery 110. In some examples, the power actuator 90 may include an overcurrent protection device 114, which may be configured as a fuse, an electromechanical circuit breaker, a solid state switch device, and/or any other practicable device.

The vehicle power supply 100 may consist of one or more vehicle batteries that store electrical energy. Additionally, and/or alternatively, the vehicle power supply 100 may generate electrical power from an electrical energy producing device, such as an alternator, that is then supplied to the power actuator 90. The alternator converts mechanical energy from an engine to electrical power for charging the vehicle 78 and/or the batteries of the cooking device power supply 98. A DC-DC converter may be coupled to the alternator for converting the power from the alternator to a requisite voltage level for charging the battery 110 prior to the energy being delivered to the cooking device power supply 98.

As provided herein, the power actuator 90 may additionally or alternatively be removably coupled with the external power supply 102, which may provide electrical power to the power actuator 90 from an electrical power grid. Generally, the electrical grid is an electrical power system network that includes a remote generating plant, transmission lines, various substations, transformers, and/or distribution lines to supply power to a stationary location having a connection point. If a connection point is proximate the cooking device 10, a connector 116 may be used to operably couple the power actuator 90 to the connection point. A rectifier 104 may be disposed between the plug and the power actuator 90 for converting AC power supplied from the connection point to DC power.

The power actuator 90 may include a repository 118 that stores predetermined guidelines. The repository 118 is a storage device, such as a non-volatile memory. The guidelines may determine which power supply supplies power to the controller 86 based on the available inputted power supplies. For example, the guidelines may provide that the external power is utilized as a primary power supply when electrically coupled to the power actuator 90, the vehicle power supply 100 may be used as a secondary power supply when coupled to the power actuator 90, and the cooking device power supply 98 is a tertiary power supply. The guidelines can additionally or alternatively indicate whether the batteries not being used are to be charged. The guidelines may take various suitable forms such as predefined look-up tables and/or control processes.

Using the guidelines and the operation condition of each battery B1-N provided by the battery monitor module 108, the power actuator 90 determines the operation of each battery B1-N. For example, the power actuator 90 determines if the batteries B are to be coupled to a particular port to supply power to one or more components of the cooking device 10, which of the batteries B should be electrically coupled to each other and/or to the ports, and/or which of the batteries should be charged. The power actuator 90 then transmits a command signal to the control module of the cooking device power supply 98 for having the cooking device power supply 98 perform the electrical connection of the batteries.

In some examples, various other conditions may affect which power supply is to be used. For example, the power actuator 90 may provide power to the control unit 56 from the cooking device power supply 98 when the vehicle 78 is in motion and from the vehicle power supply 100 when the vehicle 78 is stationary. The motion of the vehicle 78 may be measured by an accelerometer, a device on the vehicle 78, the electronic device 132 (FIG. 4), and/or through any other method without departing from the teachings provided herein.

In various examples, the cooking device 10 may include some devices that operate on AC power while others may operate on DC power. In such instances, power supplied from the power actuator 90 to the controller 86 may be supplied to an inverter 122 prior to the being supplied to the controller 86 through a first conductive lead 120 while power may be delivered to the controller 86 as DC power through parallel second conductive lead 124. In some examples, the power supplied from the power actuator 90 may be directed to the various components of the cooking device 10 rather than through the controller 86 and/or the control unit 56. Moreover, the power actuator 90 may dynamically provide power through one or both leads 120, 124 at any given time. In some examples, the power actuator 90 supplies power to the control unit 56 and/or to a motor 54 within the auger assembly 48, the auger assembly 48 being configured to provide fuel 40 to the heat source 36.

Referring to FIG. 4, in some examples, the controller 86 has a processor 126 and memory 128, according to some examples. Logic 130 is stored within the memory 128 and includes one or more routines that is executed by the processor 126. The controller 86 includes any combination of software and/or processing circuitry suitable for controlling various components of the cooking device 10 described herein including without limitation processors, microcontrollers, application-specific integrated circuits, programmable gate arrays, and any other digital and/or analog components, as well as combinations of the foregoing, along with inputs and outputs for transceiving control signals, drive signals, power signals, sensor signals, and so forth. All such computing devices and environments are intended to fall within the meaning of the term "controller" or "processor" as used herein unless a different meaning is explicitly provided or otherwise clear from the context.

In some examples, the cooking device 10 may communicate via wired and/or wireless communication with one or more handheld or electronic devices 132 through a transceiver 134. The communication may occur through one or more of any desired combination of wired (e.g., cable and fiber) and/or wireless communication mechanisms and any desired network topology (or topologies when multiple communication mechanisms are utilized). Exemplary wireless communication networks include a wireless transceiver (e.g., a BLUETOOTH module, a ZIGBEE transceiver, a Wi-Fi transceiver, an IrDA transceiver, an RFID transceiver, etc.), local area networks (LAN), and/or wide area networks (WAN), including the Internet, cellular, satellite, microwave, and radio frequency, providing data communication services.

With further reference to FIG. 4, the controller 86 receives power through the power actuator 90 as provided herein. The power actuator 90 may receive power from one or more sources, including the cooking device power supply 98, the external power supply 102, and/or the vehicle power supply 100. As provided herein, each source may be utilized in a predefined manner when electrically coupled with the power actuator 90. In operation, when powered, the controller 86 may activate/deactivate a motor 54 that rotates the auger 50 within the auger assembly 48 to move fuel 40 from the hopper 42 to the heat source 36. The motor 54 may be configured as any type of motor, including, but not limited to, an AC brushless motor, a DC brushed motor, a DC brushless motor, a direct drive motor, a linear motor, a servo motor, a stepper motor, and/or any other practicable motor. In some examples, pulse width modulation (PWM) may be employed to vary the effective voltage or current to the motor 54. PWM controls the motor 54 with short pulses of voltage or current. These pulses are varied in duration to change the speed of the motor 54. The longer the pulses, the more torque the motor 54 can produce and visa versa. For example, if the output of a DC voltage source is twelve volts, and the PWM signal is on 25%, 50%, or 75% of the time, the motor 54 would receive the approximate average of three, six, and nine volts, respectively.

PWM is a way of digitally encoding analog signal levels. Through the use of high-resolution counters, the duty-cycle of a square wave is modulated to encode a specific analog signal level. The PWM signal is still digital, however, because at any given instant in time, the full DC supply is either ON or OFF. Many PWM motors require high PWM frequencies. The PWM period should be short relative to the motor's 54 response time to a change in the switched signal state. Common PWM frequencies may range from 1 kHz to 200 kHz, for example. The duty cycle is the ratio of the on-time in a given period to the period. A position or time derivative sensor, such as an encoder, may be coupled between the motor 54 and the controller 86. The position or time derivative sensor provides positional, velocity, or acceleration feedback to the controller 86. Based on the feedback, the controller 86 may adjust the input to the motor 54, in this case adjust the PWM to the motor 54, in order to result in a desired positional move, motor speed, or motor acceleration, which may occur at a greater precision than an AC motor.

An igniter 38 within the heat source 36 ignites the fuel 40 to generate heat/smoke within the heating chamber 14 that cooks a food item disposed therein. To assist in directing the heat/smoke through the heating chamber 14, the fan 88 may direct airflow through the channel 52 of the auger assembly 48 and into the heating chamber 14. The fan 88 may be of any practicable type without departing from the teachings provided herein. The cooking device 10 may be additionally or alternatively include a valve and/or another non-electronically powered device for regulating the fuel 40. In some examples, the fuel 40 may be remotely disposed from the cooking device 10 without departing from the teachings of the present disclosure.

The electronic device 132 may be any one of a variety of computing devices and may include a processor and memory. The memory may store logic having one or more routines that is executable by the processor. For example, the electronic device 132 may be a cell phone, mobile communication device, key fob, wearable device (e.g., fitness band, watch, glasses, jewelry, wallet), apparel (e.g., a tee shirt, gloves, shoes or other accessories), personal digital assistant, headphones and/or other devices that include capabilities for wireless communications and/or any wired communications protocols.

The electronic device 132 may have an application 136 thereon and a display 138 may provide a graphical user interface (GUI) and/or various types of information to a user. The operation of the various components of the cooking device 10 may be altered through usage of the application 136 and/or information regarding the operation of the components may be illustrated on the display 138. The electronic device 132 may likewise have any combination of software and/or processing circuitry suitable for controlling the cooking device 10 described herein including without limitation processors, microcontrollers, application-specific integrated circuits, programmable gate arrays, and any other digital and/or analog components, as well as combinations of the foregoing, along with inputs and outputs for transceiving control signals, drive signals, power signals, sensor signals, and so forth.

In some examples, the electronic device 132 may be configured to receive user inputs via the touchscreen circuitry 140 on the display 138. The inputs may relate to a type of food item disposed within the heating chamber 14 and may be based on an automatic detection of the food item and/or user provided information as to a type of food item. In response, the application 136 and/or the controller 86 may provide suggested cooking characteristics. The inputs may also relate to a desired power supply, in which the user may override the guidelines provided in the repository 118. In some examples, the power supply used by the cooking device 10 may be varied based on the power needed for the user inputted instructions. Accordingly, usage of the cooking device 10 may be varied through usage of the application 136 in addition to or in lieu of usage of the input device 60 and/or a predetermined activation sequence. In addition, the electronic device 132 may also provide feedback information, such as visual, audible, and tactile alerts. The feedback information may be provided for any reason, including but not limited to, error notifications, power supply and/or percentages of power left within a power supply, food item cooked notifications, timing notifications, etc.

In some instances, the cooking device 10 may include an imaging system 142. In such instances, one or more imagers within the imaging system 142 may include an area-type image sensor, such as a CCD or a CMOS image sensor, and image-capturing optics that captures an image of an imaging field of view defined by the image-capturing optics. The captured image may be illustrated on the display 138 of the electronic device 132. In some instances, successive images may be captured and provided on the display 138 to create a video. The images may be used to monitor the food item, to determine whether to alter a temperature of the heating chamber 14, to verify proper functioning of the cooking device 10, and/or for any other purpose.

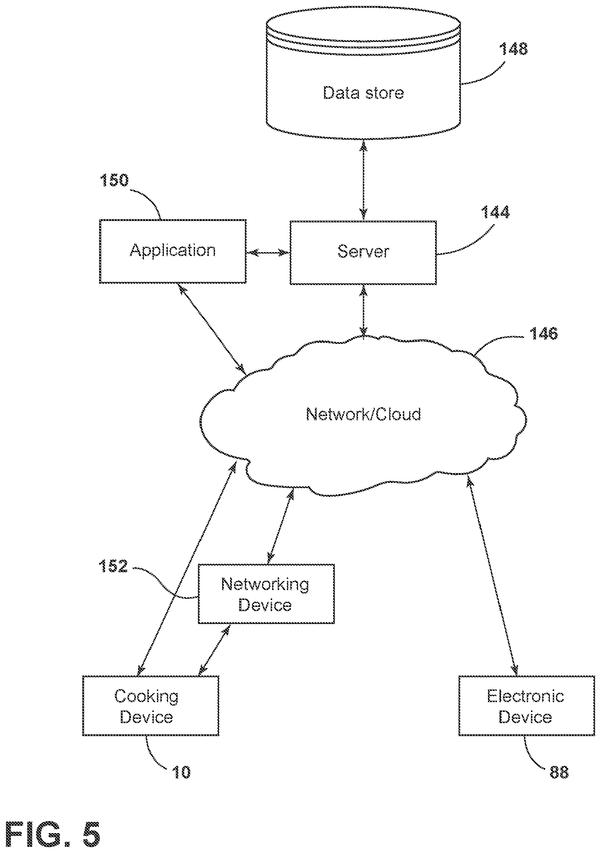

Referring to FIG. 5, in some examples, the cooking device 10 may be communicatively coupled with one or more remote sites such as a remote server 144 via a network/cloud 146. The network/cloud 146 represents one or more systems by which the cooking device 10 may communicate with the remote server 144. Accordingly, the network/cloud 146 may be one or more of various wired or wireless communication mechanisms, including any desired combination of wired and/or wireless communication mechanisms and any desired network topology (or topologies when multiple communication mechanisms are utilized). Exemplary communication networks 146 include wireless communication networks (e.g., using Bluetooth, IEEE 802.11, etc.), local area networks (LAN) and/or wide area networks (WAN), including cellular networks, satellite networks, microwave networks, radio frequency networks, the Internet and the Web, which all may provide data communication services and/or cloud computing services. The Internet is generally a global data communications system. It is a hardware and software infrastructure that provides connectivity between computers. In contrast, the Web is generally one of the services communicated via the Internet. The Web is generally a collection of interconnected documents and other resources, linked by hyperlinks and URLs. In many technical illustrations when the precise location or interrelation of Internet resources are generally illustrated, extended networks such as the Internet are often depicted as a cloud (e.g. 148 in FIG. 5). The verbal image has been formalized in the newer concept of cloud computing. The National Institute of Standards and Technology (NIST) provides a definition of cloud computing as "a model for enabling convenient, on-demand network access to a shared pool of configurable computing resources (e.g., networks, servers, storage, applications, and services) that can be rapidly provisioned and released with minimal management effort or service provider interaction." Although the Internet, the Web, and cloud computing are not exactly the same, these terms are generally used interchangeably herein, and they may be referred to collectively as the network/cloud 146.

The server 144 may be one or more computer servers, each of which may include at least one processor and at least one memory, the memory storing instructions executable by the processor, including instructions for carrying out various steps and processes. The server 144 may include or be communicatively coupled to a data store 148 for storing collected data as well as instructions for operating the cooking device 10, the control unit 56 (FIG. 4), etc. that may be directed to and/or implemented by the cooking device 10 with or without intervention from a user and/or the electronic device 132.

In some examples, the instructions may be inputted through the electronic device 132 and relayed to the server 144. Those instructions may be stored in the server 144 and/or data store 148. At various predefined periods and/or times, the cooking device 10 may communicate with the server 144 through the network/cloud 146 to obtain the stored instructions, if any exist. Upon receiving the stored instructions, the cooking device 10 may implement the instructions. The server 144 may additionally store information related to multiple cooking devices 10, food items, usage characteristics, errors, etc. and operate and/or provide instructions to the cooking device 10 in conjunction with the stored information with or without intervention from a user and/or the electronic device 132.

With further reference to FIG. 5, the server 144 also generally implements features that may enable the cooking device 10 to communicate with cloud-based applications 150. Communications from the cooking device 10 can be directed through the network/cloud 146 to the server 144 and/or cloud-based applications 150 with or without a networking device 152, such as a router and/or modem. Additionally, communications from the cloud-based applications 150, even though these communications may indicate one of the cooking device 10 as an intended recipient, can also be directed to the server 144. The cloud-based applications 150 are generally any appropriate services or applications 150 that are accessible through any part of the network/cloud 146 and may be capable of interacting with the cooking device 10.

In various examples, the electronic device 132 can be feature-rich with respect to communication capabilities, i.e. have built-in capabilities to access the network/cloud 146 and any of the cloud-based applications 150 or can be loaded with, or programmed to have, such capabilities. The electronic device 132 can also access any part of the network/cloud 146 through industry standard wired or wireless access points, cell phone cells, or network nodes. In some examples, users can register to use the remote server 144 through the electronic device 132, which may provide access the cooking device 10 and/or thereby allow the server 144 to communicate directly or indirectly with the cooking device 10. In various instances, the cooking device 10 may also communicate directly, or indirectly, with the electronic device 132 or one of the cloud-based applications 150 in addition to communicating with or through the server 144. According to some examples, the cooking device 10 can be preconfigured at the time of manufacture with a communication address (e.g. a URL, an IP address, etc.) for communicating with the server 144 and may or may not have the ability to upgrade or change or add to the preconfigured communication address.

Referring still to FIG. 5, when a new cloud-based application 150 is developed and introduced, the server 144 can be upgraded to be able to receive communications for the new cloud-based application 150 and to translate communications between the new protocol and the protocol used by the cooking device 10. The flexibility, scalability, and upgradeability of current server technology renders the task of adding new cloud-based application protocols to the server 144 relatively quick and easy.

Referring to FIG. 6, the housing 12 of the cooking device may be coupled to a support structure 158 that includes one or more legs 160. Any of the legs 160 may be operably coupled with a swivel caster and/or a wheel 162 to facilitate movement of the cooking device 10. The shelf 28 may be operably coupled with the support structure 158 and/or supported by one or more of the legs 160. The control unit 56 may be operably coupled with the hopper 42, which can be supported by the housing 12. The control unit may be electrically with the power actuator 90. In some examples, the power actuator 90 may be housed within the hopper 42. Likewise, the cooking device power supply 98 may additionally be housed within the hopper 42. As provided herein, the power actuator 90 may receive power from one or more sources, including the cooking device power supply 98, the external power supply 102, and/or the vehicle power supply 100 (when the cooking device 10 may be electrically coupled with a vehicle 78 (FIG. 1)). As provided herein, each source may be utilized in a predefined manner when electrically coupled with the power actuator 90.

In some examples, when the second branch 94 may be configured to connect with the vehicle power supply 100, and the third branch 96 may be configured to couple with an external power supply 102. Either or both of these branches 94, 96 may be concealed within the hopper 42 when not connected with respective power sources.

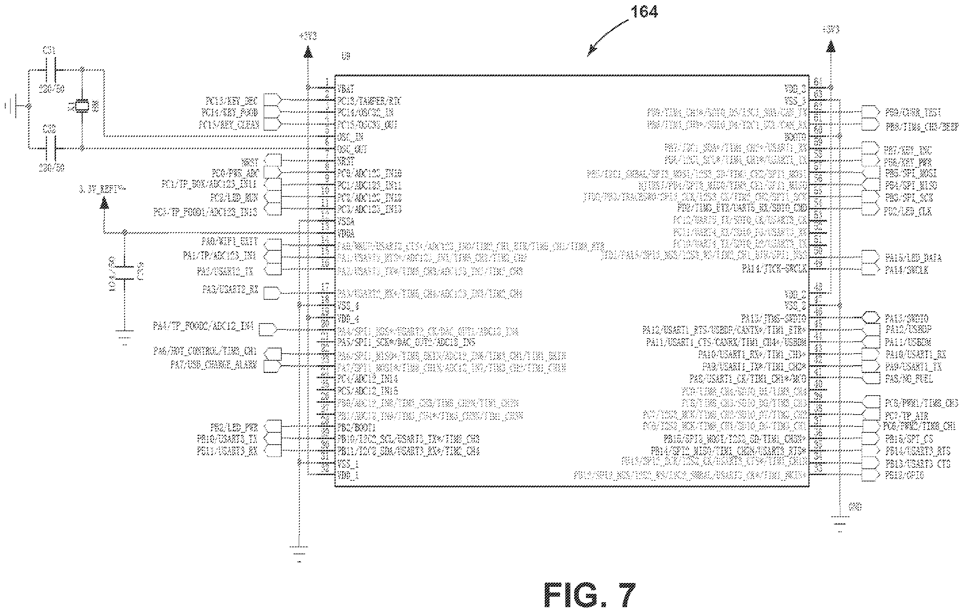

Referring to FIG. 7, in some examples, the controller 86 is operated by an application specific integrated circuit (ASIC) 164. The ASIC 164 may be mixed signal that contains power conditioning, RF, high voltage line driving, digital logic and an integrated 64 bit microcontroller. Application programming is executed in an ASIC along with customized peripherals for operating the cooking device 10 and the various assemblies of the cooking device 10. The controller 86 may be implemented using any one of a number of commercially available microcontrollers.

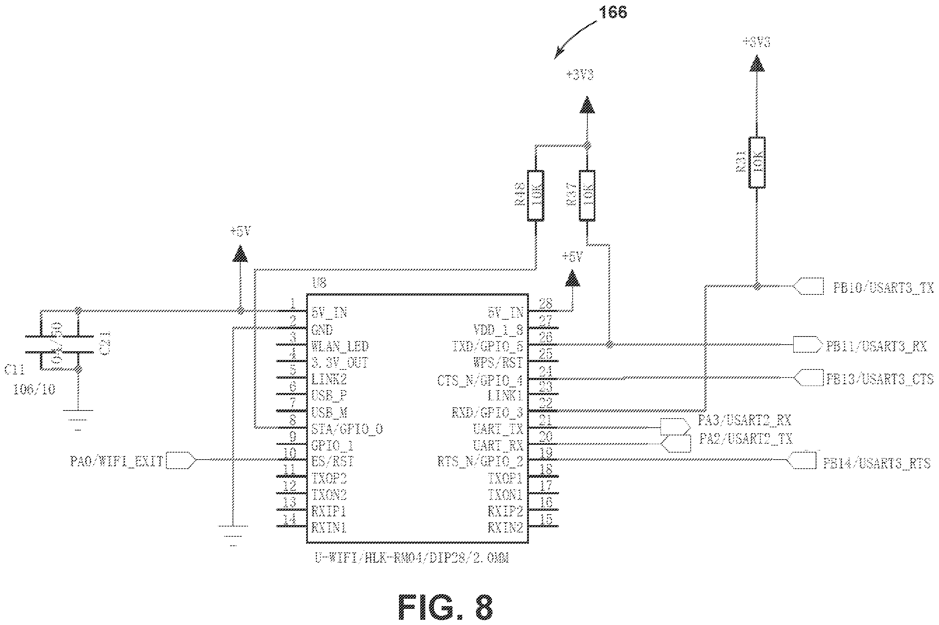

Referring to FIG. 8, in some examples, the transceiver 134 may also include an application specific integrated circuit (ASIC) 166 that contains power conditioning, RF, high voltage line driving, digital logic and an integrated 64 bit microcontroller. Application programming is executed in an ASIC along with customized peripherals for communicatively coupling the cooking device 10 with one or more electronic devices 132. In some examples, the electronic device 132 may be configured to receive user inputs via the touchscreen circuitry 140 on the display 138. In response, the inputs may be relayed to cooking device 10 and/or the controller 86 through direct communication and/or through usage of the network/cloud 146. The inputs may relate to a desired power supply, in which the user may override the guidelines provided in the repository 118 (FIG.3).

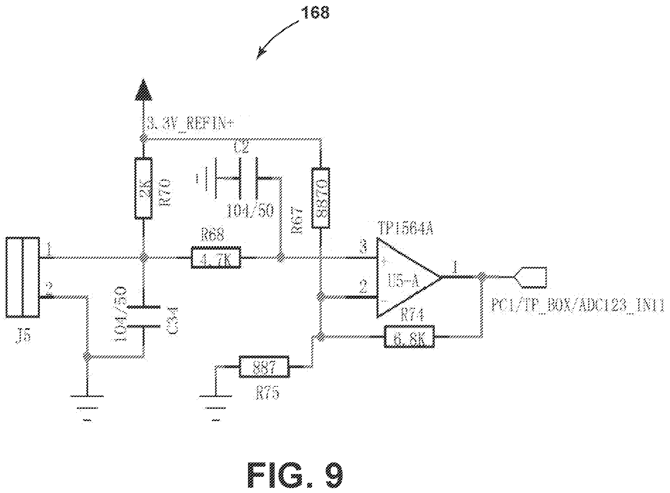

Referring to FIG. 9, the controller 86 may be operably coupled with one or more temperature detection circuits 168 that may be implemented for detecting and/or monitoring various temperatures within the cooking device 10. For example, the temperature detection circuit 168 may monitor a temperature within the heat assembly 36, the heating chamber 14, and/or the food item. In response to receiving an input from the temperature detection circuit 168, the controller 86 may alter the cooking characteristics of the cooking device 10, alter the power usage of the cooking device 10, alter power usage from the various power sources 98, 100, 102, or perform any other function.

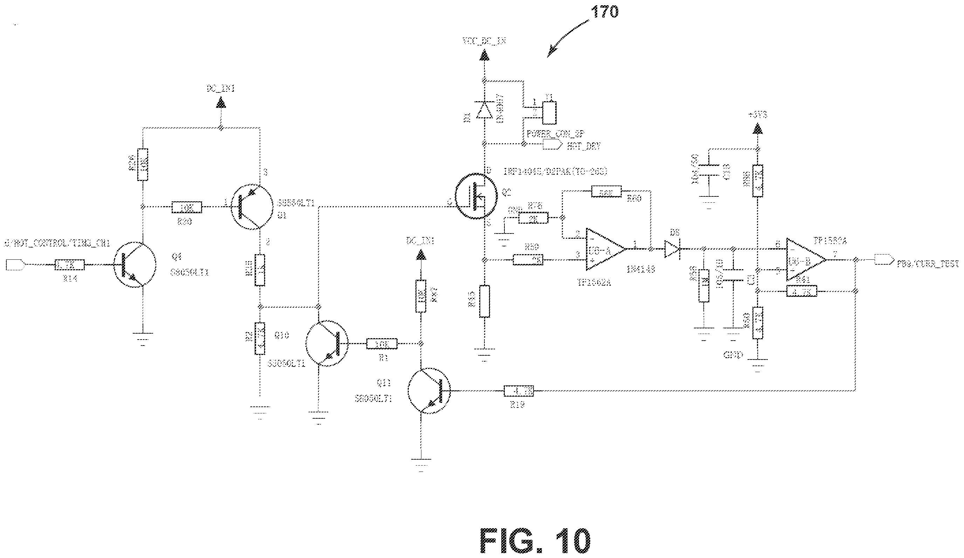

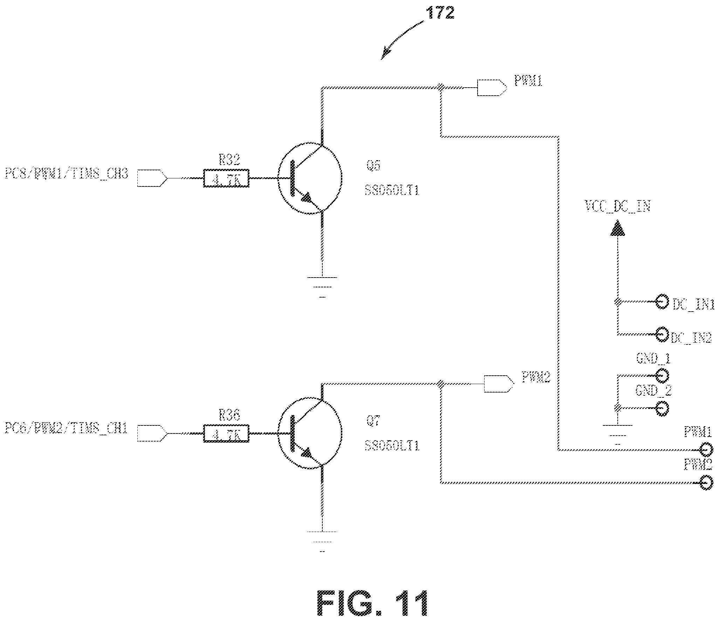

Referring to FIGS. 10 and 11, the controller 86 may also be operably coupled with an igniter drive circuit 170 and/or an igniter control circuit 172, which respectively drive and control the igniter 38 of the cooking device to selectively energize igniter 38 in order to maintain ignite the fuel 40. The circuit may be a closed loop feedback circuit in which the temperature of the heating chamber is sensed and the igniter is selectively energized when the heating chamber is below a preselected temperature.

In some examples, the igniter 38 is energized digitally such that the igniter 38 is switched ON or OFF in response to digital pulses form the igniter control circuit 172, or any other circuit within the controller 86. As more heat is needed to raise the temperature of the heating chamber 14 to the preselected temperature, an increased number of pulses will emerge from the igniter control circuit 172. Consequently, the igniter 38 will be turned on a greater number of times per unit time interval. This feature provides a low duty cycle for the igniter drive circuit 170. Consequently, the heat generated by the devices of the circuits 170, 172 may be kept to a minimum as compared to a linear-type circuit in which the devices are continually in their on state. This results in a relatively low power loss in the igniter drive circuit 170 thus resulting in less heat being generated in the cooking device thereby providing more stable circuit operation. In other examples, any other practicable type of circuit may be used for activating, controlling, and/or driving the igniter.

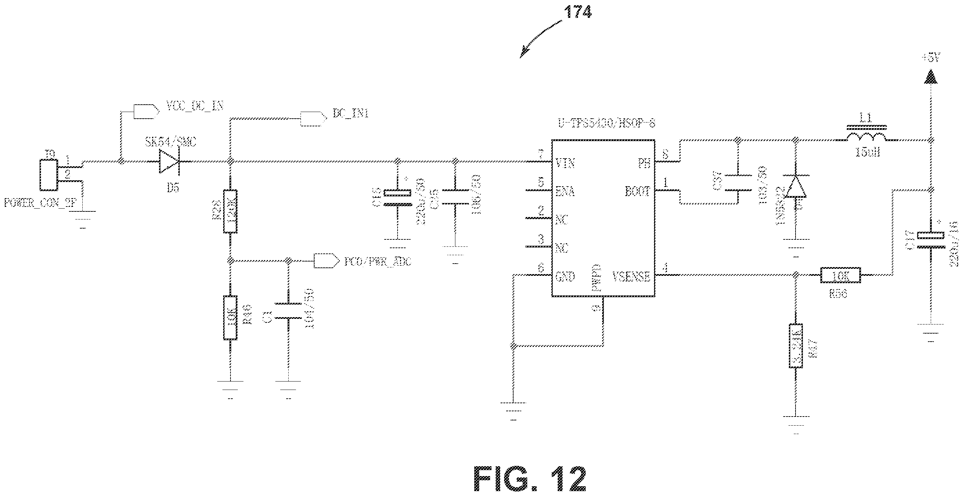

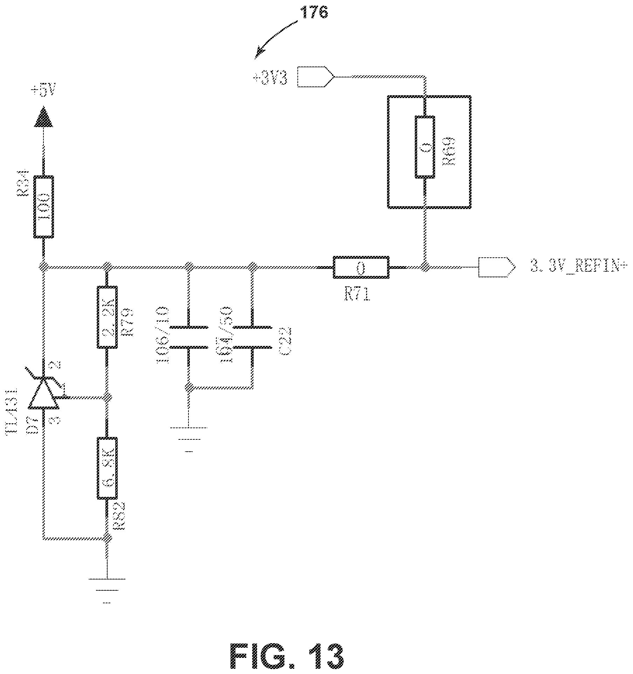

Referring to FIGS. 12 and 13, a power supply circuit 174 and a reference power supply circuit 176 are respectively illustrated. In some instances, the power supply circuit 174 may be configured as a switching power supply that employs a configuration in which an output voltage is stabilized by monitoring an output voltage, comparing the output voltage with a reference voltage generated by the reference power supply circuit 176, and performing negative feedback control of switching control in accordance with the comparison result. The reference power supply circuit 176 may generate the reference voltage that stably supplies a constant voltage to a target circuit, such as the controller 86, regardless of an environmental change, such as when the power source is varied between the cooking device power supply 98, the vehicle power supply 100, and/or the external power supply 102. Such a reference voltage supply circuit may be used in driving an analog circuit such as an analog-digital converter (ADC), a phase-locked loop (PLL), and a filter circuit of the cooking device 10.

The examples of the cooking device of the present disclosure may offer a variety of advantages. For instance, the power actuator provided herein may provide various ways to power the cooking device thereby realizing normal functioning of the cooking device during transportation to potentially broaden the applicable scenarios in which cooking device may be utilized. The cooking device of the present disclosure may realize low power operation through the dynamic switching of available power supplies that prolongs the service time of the cooking device power supply and expands the endurance time and service performance of the cooking device. The cooking device can directly use the vehicle power supply to meet functioning requirements without further circuit adjustment and redesign of the existing vehicle by using the same voltage and the vehicle power supply. The various power supplies that are electronically coupled with the power actuator allow for optional power paths such that the power supply of the cooking device may be switched under various working conditions. For instance, when the vehicle is parked, the vehicle power supply may be utilized if available. When the vehicle is in motion, the cooking device power supply may be utilized thereby reducing the frequency of use of the cooking device power supply, avoiding over discharge/charge of the batteries, and/or prolonging the service life of the cooking device. The cooking device may also include a transceiver that may communicate directly or through the cloud with a remote electronic device. Through the electronic device, a user may alter the operation of one or more components of the cooking device. Additionally, the electronic device may receive information from the cooking device in regards to one or more components thereof. For example, a user may monitor the available power supplies through the electronic device and/or toggle usages between power supplies.

It will be understood by one having ordinary skill in the art that construction of the described invention and other components is not limited to any specific material. Other exemplary examples of the invention disclosed herein may be formed from a wide variety of materials unless described otherwise herein.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

Furthermore, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected" or "operably coupled" to each other to achieve the desired functionality, and any two components capable of being so associated can also be viewed as being "operably couplable" to each other to achieve the desired functionality. Some examples of operably couplable include, but are not limited to, physically mateable and/or physically interacting components and/or wirelessly interactable and/or wirelessly interacting components and/or logically interacting and/or logically interactable components.

It is also important to note that the construction and arrangement of the elements of the invention as shown in the exemplary examples is illustrative only. Although only a few examples of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connectors or other elements of the system may be varied, the nature or number of adjustment positions provided between the elements may be varied. It should be noted that the elements and/or assemblies of the system might be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary examples without departing from the spirit of the present innovations.

It will be understood that any described processes or steps within described processes may be combined with other disclosed processes or steps to form structures within the scope of the present invention. The exemplary structures and processes disclosed herein are for illustrative purposes and are not to be construed as limiting.

It is also to be understood that variations and modifications can be made on the aforementioned structures and methods without departing from the concepts of the present invention, and further it is to be understood that such concepts are intended to be covered by the following claims unless these claims by their language expressly state otherwise.

## Claims

1. A cooking device comprising:
a trailer having one or more frame members and configured to couple with a vehicle;
a housing supported by the frame members and defining a heating chamber;
a heat source disposed within the heating chamber;
a controller operably coupled with an auger assembly to direct fuel to the heat source for heating the heating chamber; and
two or more power supplies, wherein the two or more power supplies includes:
a battery, and
a battery control module coupled to the battery, the battery control module being configured to:
determine a charge status of the battery and a power demand of the cooking device, and
determine, based on the power demand of the cooking device, that the battery can operate as a power supply of the cooking device, and
electrically couple to the battery to a power actuator of the cooking device, wherein the power actuator is operably coupled with the controller and configured to accept electrical power from the two or more power supplies and provide power to the controller from one of the two or more power supplies.

2. The cooking device of claim 1, wherein the housing includes a lower portion, an upper portion, and a lid operably coupled to the upper portion by a hinge.

3. The cooking device of claim 1, further comprising:
a hopper operably coupled with an auger assembly, the auger assembly including a channel and an auger disposed within the channel; and
a motor operably coupled with the auger and electrically powered by the power actuator.

4. The cooking device of claim 1, wherein the two or more power supplies includes a cooking device power supply, a vehicle power supply disposed within and a vehicle and separable from the cooking device, and an external power supply that supplies power from an electrical power grid.

5. The cooking device of claim 4, wherein the power actuator includes a repository having guidelines to determine which power supply supplies power to the controller based on an availability of inputted power supplies.

6. The cooking device of claim 5, wherein the guidelines provide that the external power supply is utilized as a primary power supply when electrically coupled to the power actuator, the vehicle power supply may be used as a secondary power supply when coupled to the power actuator, and the cooking device power supply is a tertiary power supply.

7. The cooking device of claim 1, further comprising:
an inverter disposed between the power actuator and the controller and configured to convert DC power from the power actuator to AC power to operate at least one of a motor and a fan.

8. The cooking device of claim 1, further comprising:
a control unit, wherein power is delivered to the control unit from the power actuator as AC power through a first conductive lead and as DC power through a second conductive lead.

9. A cooking device comprising:
a control unit configured to operate a heat source;
a cooking device power supply, wherein the cooking device power supplying includes:
a battery, and
a battery control module coupled to the battery, the battery control module being configured to:
determine a charge status of the battery and a power demand of the cooking device, and
determine, based on the power demand of the cooking device, that the battery can operate as a power supply of the cooking device;
a vehicle power supply; and
a power actuator electrically powering at least one of the control unit or the heat source at a set power, the power actuator configured to couple to the cooking device power supply and the vehicle power supply, wherein the power actuator provides power to the control unit from the cooking device power supply when a vehicle is in motion and from the vehicle power supply when the vehicle is stationary.

10. The cooking device of claim 9, wherein a first branch, a second branch and a third branch are electrically connected in parallel to the power actuator, the first branch connected with the cooking device power supply, the second branch configured to connect with the vehicle power supply, and the third branch configured to couple with an external power supply and a rectifier.

11. The cooking device of claim 9, further comprising:
a transceiver operably coupling the control unit with a remote electronic device.

12. The cooking device of claim 9, further comprising:
an overcurrent protection device operably coupled with the power actuator.

13. The cooking device of claim 9, further comprising:
a display electrically coupled with the control unit and configured to provide a visual indication of a currently utilized power supply.

14. The cooking device of claim 9, further comprising:
a hopper operably coupled with an auger assembly, the auger assembly including a channel and an auger disposed within the channel; and
a motor operably coupled with the auger and electrically powered by the power actuator.

15. The cooking device of claim 9, further comprising a housing containing the heat source, wherein the housing includes a lower portion, an upper portion, and a lid operably coupled to the upper portion by a hinge.
